Europäisches Patentamt

European Patent Office

Office européen des brevets

(11) Veröffentlichungsnummer: **0 460 299 A1**

(12) **EUROPÄISCHE PATENTANMELDUNG**

(21) Anmeldenummer: **90125546.3**

(22) Anmeldetag: **27.12.90**

(51) Int. Cl.⁵: **F16K 1/36**, F16K 17/04, F01P 3/08

(30) Priorität: **08.06.90 DE 4018363**

(43) Veröffentlichungstag der Anmeldung:
**11.12.91 Patentblatt 91/50**

(84) Benannte Vertragsstaaten:
**DE ES FR GB IT SE**

(71) Anmelder: **Gustav Wahler GmbH u. Co**
**Hindenburgstr. 146**
**W-7300 Esslingen(DE)**

(72) Erfinder: **Tuschwitz, Peter Michael**
**Dietrich-Bonhoeffer-Strasse 2**
**W-7300 Esslingen(DE)**
Erfinder: **Hörmann, Willibald**
**Geuernrain 10**
**W-7300 Esslingen(DE)**

(74) Vertreter: **Kratzsch, Volkhard, Dipl.-Ing.**
**Mülbergerstrasse 65**
**W-7300 Esslingen(DE)**

(54) **Drucksteuerventil, insbesondere für Ölspritzdüsen für Brennkraftmaschinen.**

㊼ Ein Drucksteuerventil, insbesondere für Ölspritzdüsen für Brennkraftmaschinen, hat ein Gehäuse (11) mit einem Einlaßkanal (13) und einem Auslaßkanal (15), die über eine Ventilöffnung (18) verbunden sind. In einer Gehäusebohrung (12) ist ein Ventilverschlußglied (19) gleitverschieblich gegen die Wirkung einer axialen Feder (22) gehalten und in Schließstellung von der Feder (22) mit einer Ventilfläche (21) gegen eine gehäuseseitige Sitzfläche (17) angepreßt. Bei vorgegebenem, das Ventilverschlußglied (19) beaufschlagenden Druck, insbesondere des Öls im Einlaßkanal (13), ist das Ventilverschlußglied (19) von der Sitzfläche (17) abhebbar, wodurch der Mediumdurchgang vom Einlaßkanal (13) zum Auslaßkanal (15) freigegeben wird. Zumindest eine der beiden in der Schließstellung des Ventilverschlußgliedes (19) miteinander in Anlageberührung stehenden Flächen (21,17) des Ventilverschlußgliedes (19) bzw. Gehäuses (11) ist so ausgebildet, daß die Kontaktfläche verringert ist und dadurch die einer Ventilöffnung bei sehr geringem und eng toleriertem Öffnungsdruck entgegenwirkenden Adhäsionskräfte reduziert sind.

Fig.1

Die Erfindung bezieht sich auf ein Drucksteuerventil, insbesondere für Ölspritzdüsen für Brennkraftmaschinen, der ansonsten im Oberbegriff des Anspruchs 1 genannten Art.

Drucksteuerventile sind grundsätzlich bekannt. Sie dienen dazu, eine Druckbegrenzung vorzunehmen. Insbesondere für Ölspritzdüsen für Brennkraftmaschinen werden Drucksteuerventile eingesetzt, an die besonders hohe Anforderungen gestellt werden; denn zum einen ist das Drucksteuerventil außerordentlich klein und kompakt. Z.B. ist bei dem Einsatz für Brennkraftmaschinen für jeden Zylinder mindestens ein solches Drucksteuerventil vorgesehen, an das eine Ölspritzdüse, die in den Zylinderraum geführt ist, angeschlossen ist, wobei die Ölspritzdüse von unten her gegen den Boden des im Zylinder enthaltenen Kolbens gerichtet ist und diesen mit einem Ölspritzstrahl zur Kühlung beaufschlagen soll. Insbesondere bei einem solchen Einsatzzweck wird an das Drucksteuerventil die Anforderung gestellt, daß dieses reproduzierbar bei einem außerordentlich niedrigen Öffnungsdruck öffnet, und dies in sehr engen Grenzen. Der Öffnungsdruck liegt z.B. etwa bei 3 bar, in einem besonderen Beispiel bei 2,8 bar mit einer zugelassenen Toleranz von ± 0,2 bar. Bei einem solchen geringen Öffnungsdruck wirken die verschiedensten Parameter der Einhaltung dieser Bedingung entgegen. Selbst wenn alle die Gleitverschiebbarkeit des Ventilverschlußgliedes beeinflussenden Parameter berücksichtigt werden, ist die Einhaltung eines derart niedrigen Öffnungsdruckes, dazu noch in diesen engen Toleranzen, bisher nicht möglich gewesen. Es wurde gefunden, daß dies dadurch bedingt ist, daß zwischen den in Schließstellung in Anlageberührung miteinander stehenden Flächen eine wenn auch geringe Adhäsionskraft wirkt, die auf jeden Fall dazu führt, daß die Vorgaben nicht erreichbar sind, sondern statt dessen das Drucksteuerventil nahezu willkürlich bei den verschiedensten Öffnungsdrücken öffnet.

Der Erfindung liegt die Aufgabe zugrunde, ein Drucksteuerventil der im Oberbegriff des Anspruchs 1 genannten Art zu schaffen, das als Serienteil selbst bei kleinen Abmessungen außerordentlich kompakt, einfach und kostengünstig ist und die Einhaltung eines vorgegebenen, niedrig liegenden Öffnungsdruckes mit engen Toleranzen reproduzierbar gewährleistet.

Die Aufgabe ist bei einem Drucksteuerventil der eingangs genannten Art gemäß der Erfindung durch die Merkmale im Kennzeichnungsteil des Anspruchs 1 gelöst. Dadurch, daß zumindest eine der beiden Flächen des Ventilverschlußgliedes bzw. des Gehäuses, die in der Schließstellung des Ventilverschlußgliedes miteinander in Anlageberührung stehen und zwischen denen dann wohl aufgrund eines Mediumfilmes Adhäsionskräfte wirken, so ausgebildet ist, daß die Kontaktfläche verringert ist, ist in überraschender Weise und mit einfachen konstruktiven Mitteln die Einhaltung eines sehr niedrigen Öffnungsdrucks, z.B. in der Größenordnung zwischen 2,7 und 2,8 bar, und dies unter Einhaltung sehr enger Toleranzen, gewährleistet, und dies reproduzierbar. Dabei werden die Abmessungen des Drucksteuerventils unverändert klein gehalten, wobei dieses unverändert einfach, kostengünstig, kompakt und leicht gestaltet werden kann.

Eine besonders vorteilhafte Ausgestaltung ergibt Anspruch 2 dergestalt, daß zumindest eine der beiden Flächen eine die Kontaktfläche verringernde Form und/oder Größe aufweist.

Weitere wesentliche Merkmale der Erfindung und Ausgestaltungen ergeben sich aus den übrigen Ansprüchen 3 bis 24.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:

| | |
|---|---|
| Fig. 1 | einen schematischen axialen Längsschnitt eines Teils eines Drucksteuerventils gemäß einem ersten Ausführungsbeispiel, |
| Fig. 2 | einen Schnitt einer Einzelheit des Drucksteuerventils in Fig. 1 in größerem Maßstab, |
| Fig. 3 bis 8 | jeweils einen Schnitt etwa entsprechend demjenigen in Fig. 2 verschiedener weiterer Ausführungsbeispiele eines Drucksteuerventils, |
| Fig. 9 | einen Schnitt etwa entsprechend demjenigen in Fig. 2 eines Drucksteuerventils gemäß einem weiteren Ausführungsbeispiel, |
| Fig. 10 | einen schematischen Schnitt entlang der Linie X-X in Fig. 9, |
| Fig. 11 | einen Schnitt etwa entsprechend demjenigen in Fig. 2 eines weiteren Ausführungsbeispiels eines Drucksteuerventils, |
| Fig. 12 | einen schematischen Schnitt |

entlang der Linie XII-XII in Fig. 11.

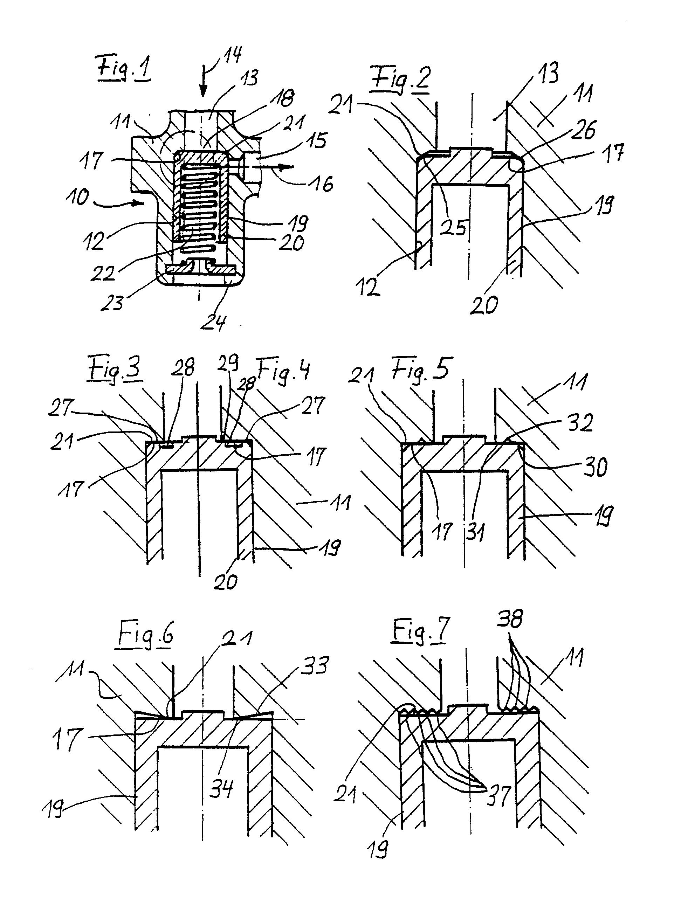

In Fig. 1 und 2 ist schematisch ein Drucksteuerventil 10 gemäß einem ersten Ausführungsbeispiel dargestellt, das insbesondere für eine daran anschließbare Ölspritzdüse für eine Brennkraftmaschine bestimmt ist. Das Drucksteuerventil 10 weist ein Gehäuse 11 auf, das mit einer Bohrung 12 versehen ist. Innerhalb des Gehäuses 11 befindet sich ein Einlaßkanal 13, der koaxial zur Bohrung 12 ausgerichtet ist und dem in Richtung des Pfeiles 14 ein insbesondere flüssiges Medium, hier insbesondere Öl, unter Druck zuführbar ist. Ferner enthält das Gehäuse 11 einen Auslaßkanal 15, aus dem das zugeführte, insbesondere flüssige Medium, insbesondere Öl, bei Öffnen des Drucksteuerventils 10 in Richtung des Pfeiles 16 entweichen kann. An den Auslaßkanal 15 ist über eine nicht weiter gezeigte Leitung eine Ölspritzdüse angeschlossen, der bei geöffnetem Drucksteuerventil 10 das unter Druck stehende Medium, insbesondere Öl, zugeführt wird, das dann aus der Ölspritzdüse in einem z.B. zum Kolbenboden eines in einem Zylinder einer Brennkraftmaschine befindlichen Kolbens gerichteten Strahl gegen die Unterseite des Kolbenbodens zu dessen Kühlung gespritzt wird.

Der Einlaßkanal 13 hat einen gegenüber der Bohrung 12 reduzierten Durchmesser, wobei in diesem Stufenbereich zwischen dem Einlaßkanal 13 und der Bohrung 12 eine gehäuseseitige Sitzfläche 17 gebildet ist, die eine Ventilöffnung 18 konzentrisch umgibt. Der Aulaßkanal 15 ist quer, z.B. etwa rechtwinklig, zum Einlaßkanal 13 und zur Bohrung 12 gerichtet. Er mündet unterhalb der Ventilöffnung 18 und Sitzfläche 17 in die Bohrung 12.

In der Bohrung 12 des Gehäuses 11 ist ein Ventilverschlußglied 19 gleitverschieblich gehalten. Das Ventilverschlußglied 19 ist als etwa hutförmiger oder kappenförmiger Kolben 20 ausgebildet, der in Fig. 1 unten offen ist und der mit seiner Umfangsfläche an mehreren Axialstellen in der Bohrung 12 geführt ist, wobei aber ein solcher Umfangsspalt besteht, der einen Durchlaß des flüssigen Mediums, insbesondere des Öls, zuläßt, wodurch zugleich eine Schmierung geschieht. Das Ventilverschlußglied 19 ist mit einer zumindest im wesentlichen axialen Ventilfläche 21, die zur Sitzfläche 17 hinweist, gegen diese Sitzfläche 17 in der Schließstellung des Drucksteuerventils 10 gemäß Fig. 1 angepreßt. Dies geschieht unter der Wirkung einer Feder 22, die hier als zylindrische Schraubenfeder ausgebildet und im Inneren des hutförmigen oder kappenförmigen Kolbens 20 enthalten und an dessen oberseitigem Boden abgestützt ist. Mit ihrem anderen Ende ist die Feder 22 axial an einem Widerlager 23 abgestützt, das am Gehäuse 11 befestigt ist, z.B. im unteren Bereich dieses durch Umbördeln eines Kragens 24 gehalten ist.

Fig. 1 zeigt das Drucksteuerventil 10 in seiner Schließstellung, in der der Durchgang vom Einlaßkanal 13 zum Auslaßkanal 15 gesperrt ist. Das Ventilverschlußglied 19 ist aber unter einem vorgegebenen Druck eines flüssigen Mediums, z.B. des Öls, der innerhalb des Einlaßkanals 13 herrscht und die in diesem Flächenbereich befindliche Axialfläche des Ventilverschlußgliedes 19 beaufschlagt, gegen die Wirkung der Feder 22 mit der Ventilfläche 21 von der gehäuseseitigen Sitzfläche 17 abhebbar, wodurch die Ventilöffnung 18 für den Mediumdurchgang vom Einlaßkanal 13 zum Auslaßkanal 15 freigegeben wird. Erforderlich ist aber, daß der im Einlaßkanal 13 wirksame Druck des flüssigen Mediums, insbesondere des Öls, eine Mindestgröße hat, die z.B. etwa 3 bar beträgt. Genaugenommen ist das Drucksteuerventil 10 so ausgelegt, daß das Ventilverschlußglied 19 dann öffnet und den Durchgang freigibt, wenn der Öffnungsdruck 2,8 bar mit einer Toleranz von ± 0,2 bar beträgt. Ersichtlich ist der Toleranzbereich außerordentlich gering im Vergleich zu sonst bekannten Systemen. Das Drucksteuerventil 10 ist also als Druckbegrenzungsventil in der Lage, bei derart geringem Öffnungsdruck und dabei in einem sehr engen Toleranzfeld zuverlässig zu arbeiten. Voraussetzung dafür ist, daß eine Vielzahl von Parametern, die das Öffnungsverhalten beeinflussen, exakt beherrscht wird, z.B. die Vorspannung der Feder 22, die Steifigkeit dieser, die Oberflächenrauhigkeiten der an der Gleitbewegung teilhabenden Flächen des Ventilverschlußgliedes 19 und der Bohrung 12 des Gehäuses 11, die Passungspaarung zwischen der Bohrung 12 und dem Ventilverschlußglied 19, die Geometrie der Bohrung 12 und des Ventilverschlußgliedes 19, z.B. die Führungslänge, Führungsform und dergleichen. Selbst wenn diese Parameter sorgfältig abgestimmt sind, wirken - ausgehend von der in Fig. 1 gezeigten Schließstellung des Drucksteuerventils 10 - in dieser Schließstellung im Bereich der miteinander in Anlageberührung stehenden Flächen, d.h. der Sitzfläche 17 einerseits und der Ventilfläche 21 andererseits, normalerweise Haftkräfte, die beim genannten geringen Öffnungsdruck sich normalerweise derart stark bemerkbar machen, daß das Drucksteuerventil 10 den genannten Anforderungen deswegen nicht genügen kann, d.h. nicht bei einem außerordentlich kleinen Öffnungsdruck angegebener Größe zuverlässig und reproduzierbar öffnen kann.

Diese Probleme sind nun in einfacher Weise durch folgende Maßnahmen, die ebenfalls wesentlicher Teil der Erfindung sind, beseitigt.

Es ist nämlich zumindest eine der beiden Flächen 21, 17 des Ventilverschlußgliedes 19 bzw. des Gehäuses 11, die in der Schließstellung gemäß Fig. 1 miteinander in Anlageberührung stehen, so gestaltet, daß die Kontaktfläche oder der flächige Berührungsbereich verringert ist. Allein durch Ausbildung zumindest einer der beiden Flächen 17, 21 ist eine Reduzierung der Kontaktfläche erreicht, wodurch die Adhäsionskräfte in der Schließstellung gemäß Fig. 1 völlig überraschend nun keinen derartigen Einfluß mehr haben und gewährleistet ist, daß das Drucksteuerventil 10 zuverlässig bei einem derart niedrigen Öffnungsdruck eingangs genannter Art und bei der nur kleinen zulässigen Toleranz reproduzierbar öffnet. Zumindest eine der beiden Flächen 17, 21 weist eine die Kontaktfläche verringernde Form und/oder Größe auf.

Beim ersten Ausführungsbeispiel gemäß Fig. 1 und 2 ist dies dadurch verwirklicht, daß die Fläche des einen Teils, beim gezeigten Ausführungsbeispiel beispielsweise die gehäuseseitige Sitzfläche 17, als ringförmige Kegelstumpffläche 25 im Querschnitt ausgebildet ist. In Anpassung daran ist die Fläche des anderen Teils, beim gezeigten Ausführungsbeispiel die Ventilfläche 21 des Ventilverschlußgliedes 19, als ringförmige und im Querschnitt nach außen konvex gewölbte Bogenfläche 26 ausgebildet. Diese Gestaltung beider Flächen 25 und 26 ergibt sich insbesondere aus Fig. 2. Dadurch ist erreicht, daß in der Schließstellung gemäß Fig. 2 das Ventilverschlußglied 19 im wesentlichen nur mit Linienberührung an der gehäuseseitigen Sitzfläche 17 in Form der Kegelstumpffläche 25 anliegt. Außerdem ist die wirksame Axialfläche des Ventilverschlußgliedes 19, auf die das Druckmedium im Einlaßkanal 13 wirken kann, je nach Bemessung zumindest geringfügig vergrößert. Auf jeden Fall ist der Berührungsbereich zwischen den Flächen 25 und 26 erheblich reduziert, was zu einer entsprechenden Reduzierung der Adhäsionskräfte führt. Dies ist beim ersten Ausführungsbeispiel in konstruktiv einfacher und kostengünstiger Weise realisiert, was für das Drucksteuerventil 10, das ein Serienteil darstellt, von erheblicher zusätzlicher Bedeutung ist.

Es versteht sich, daß bei einem anderen, nicht gezeigten Ausführungsbeispiel die Gestaltung der Flächen auch vertauscht sein kann, so daß dann die gehäuseseitige Sitzfläche 17 als konvex nach außen vorgewölbte Bogenfläche und die Ventilfläche 21 des Ventilverschlußgliedes 19 als Kegelstumpffläche gestaltet ist.

Bei den anderen Ausführungsbeispielen in Fig. 3 - 12 sind zur Vereinfachung für die Teile, die dem ersten Ausführungsbeispiel entsprechen, gleiche Bezugszeichen verwendet, so daß dadurch zur Vermeidung unnötiger Wiederholungen auf die Beschreibung des ersten Ausführungsbeispieles Bezug genommen ist.

Den Ausführungsbeispielen in Fig. 3 - 7 ist allen gemeinsam, daß zumindest eine der beiden Flächen, d.h. die Sitzfläche 17 und/oder die Ventilfläche 21, eine oder mehrere in Axialrichtung überstehende Ringflächen aufweist.

So ist beim zweiten Ausführungsbeispiel in Fig. 3 eine axial überstehende Ringfläche 27 an der axialen Ventilfläche 21 des Ventilverschlußgliedes 19 ausgebildet. Die Sitzfläche 17 des Gehäuses 11 ist hier als plane Stufenfläche gestaltet. Das Ventilverschlußglied 19 steht in der Schließstellung gemäß Fig. 3 daher nur mit einer reduzierten Fläche, nämlich nur mit der kreisringförmigen, kleineren Ringfläche 27, in Kontakt mit der Sitzfläche 17. Es versteht sich, daß auch mehrere solche zueinander konzentrische, axial überstehende Ringflächen 27 beim Ausführungsbeispiel gemäß Fig. 3 vorgesehen sein können, die dann zweckmäßigerweise innerhalb einer gemeinsamen Diametralebene verlaufen. Die Ringfläche 27 ist hier kreisringförmig. Sie ist durch zumindest eine Ringnut 28 von der übrigen Axialfläche des Ventilverschlußgliedes 19 abgesetzt. Die Ringnut 28 befindet sich hier in einem solchen Bereich, der nur noch teilweise in der gezeigten Schließstellung von der gehäuseseitigen Sitzfläche 17 überdeckt ist. Die Ringnut 28 ist hier im Querschnitt etwa U-förmig und in Fig. 3 nach oben hin offen. Es versteht sich, daß diese z.B. statt dessen auch V-förmig oder im Querschnitt anders gestaltet sein kann.

Das Ausführungsbeispiel gemäß Fig. 4 unterscheidet sich von demjenigen gemäß Fig. 3 dadurch, daß zwar ebenfalls eine Ringnut 28 im Ventilverschlußglied 19 vorgesehen ist, die auch im Querschnitt ebenso gestaltet ist. Die Ringnut 28 ist jedoch so plaziert, daß kolbenseitig noch eine zweite Ringfläche 29 geschaffen ist, die ebenfalls kreisringförmig ausgebildet ist und in einer mit der Ringfläche 27 gemeinsamen Diametralebene verläuft.

Bei den Ausführungsbeispielen in Fig. 3 ist die mindestens eine Ringfläche 27 bzw. sind die beiden Ringflächen 27 und 29 an der axialen Ventilfläche 21 des Ventilverschlußgliedes 19 in Form des Kolbens 20 ausgebildet. Es versteht sich gleichwohl, daß im Rahmen der Erfindung auch die derartige kinematische Umkehr liegt, daß statt dessen die mindestens eine Ringfläche 27 bzw. die beiden Ringflächen 27, 29 an der gehäuseseitigen Sitzfläche 17 ausgebildet sind.

Auch bei dem in Fig. 5 gezeigten Ausführungsbeispiel sind in Axialrichtung überstehende Ringflächen in Gestalt der beiden Ringflächen 30 und 31 vorgesehen, die zueinander konzentrisch sind und innerhalb einer gemeinsamen Diametralebene laufen. Die Ringflächen 30, 31 sind ebenfalls kreisringförmig ausgebildet. Sie sind durch eine im Querschnitt etwa V-förmige Ringnut 32 voneinander und von der übrigen Axialfläche abgesetzt. Ersichtlich sind bei diesem Ausführungsbeispiel in Fig. 5 die beiden Ringflächen 30, 31 jedoch an der gehäuseseitigen Sitzfläche 21 ausgebildet. Die Ventilfläche 21 des Ventilverschlußgliedes 19 dagegen ist hier als ebene kreisscheibenförmige Fläche ausgebildet.

Es versteht sich, daß auch beim Ausführungsbeispiel gemäß Fig. 5 die Verhältnisse vertauscht sein können.

Auch bei dem in Fig. 6 gezeigten Ausführungsbeispiel ist eine axial überstehende Ringfläche vorhanden. Diese ist hier an der gehäuseseitigen Sitzfläche 17 des Gehäuses 11 ausgebildet. Die Besonderheit liegt hier darin, daß die Sitzfläche 17 in Fig. 6 nach oben und radial nach außen hin abfällt, und zwar etwa kegelstumpfförmig unter Bildung einer Freifläche 33. Die axial überstehende Ringfläche 34 ist hier zumindest annähernd nach Art einer Ringschneide ausgebildet, wobei ein schmaler kreisringförmiger Flächenbereich der Ringfläche 34 im radial inneren Flächenbereich verbleibt, der nach wie vor einen kreisringförmigen Kontakt mit der Ventilfläche 21 des Ventilverschlußgliedes 19 gewährleistet. Auch wenn also die Ringfläche 34 bei der zeichnerischen Darstellung gemäß Fig. 6 den Eindruck einer Ringschneide vermittelt, ist eine solche scharfe und nur eine Linienberührung vorgebende Schneide nicht vorhanden, sondern statt dessen eine kreisringförmig gestaltete Fläche, die aber im Bereich der Freifläche 33 außer Kontakt mit der Ventilfläche 21 des Ventilverschlußgliedes 19 steht.

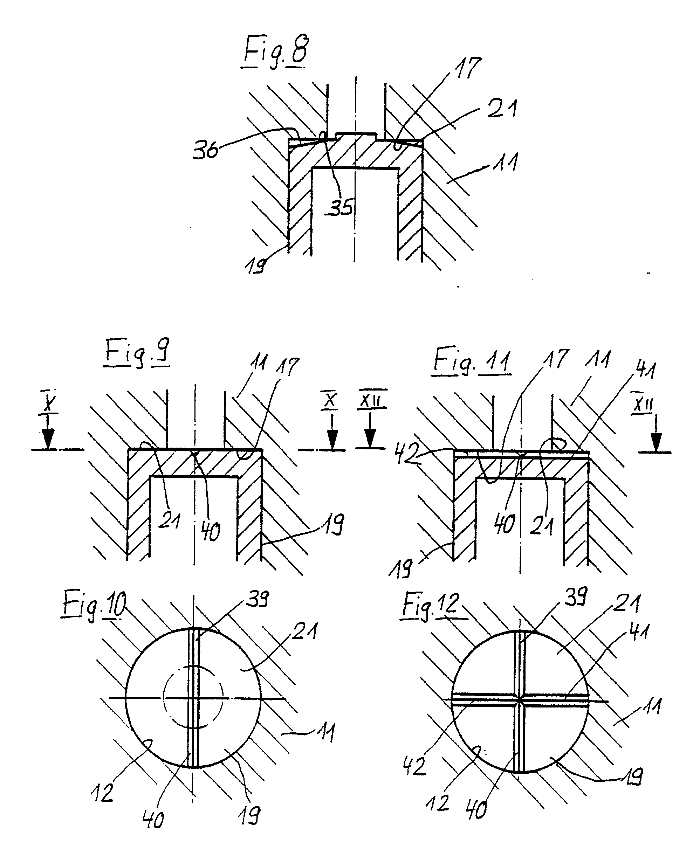

Beim analogen Ausführungsbeispiel gemäß Fig. 8 ist ebenfalls eine solche Ringfläche 35 vorgesehen, die in Axialrichtung aufgrund einer Freifläche 36 abfällt. Gemäß Fig. 8 ist jedoch hier diese Ringfläche 35 an der axialen Ventilfläche 21 des Ventilverschlußgliedes 19 ausgebildet, während die gehäuseseitige Sitzfläche 17 als Diametralfläche plan gestaltet ist.

Bei dem in Fig. 7 gezeigten Ausführungsbeispiel sind mehrere axial überstehende Ringflächen 37 vorgesehen, die zueinander konzentrisch und allesamt innerhalb einer gemeinsamen Diametralebene verlaufen. Die Ringflächen 37 sind durch einzelne Ringnuten 38 von der übrigen Axialfläche abgesetzt. Die Ringnuten 38 sind im Querschnitt z.B. etwa V-förmig ausgebildet. Die Besonderheit liegt hier darin, daß die einzelnen Ringflächen 37 zumindest annähernd nach Art von Ringschneiden ausgebildet sind, die sich im Querschnitt etwa keilförmig zu einer Schneide verjüngen. Auch hier sind alle Ringflächen 37 an der gehäuseseitigen Sitzfläche 17 ausgebildet, vergleichbar mit dem Ausführungsbeispiel gemäß Fig. 6 und der dort einzigen Ringfläche 34. Auch hier versteht es sich, daß auch die kinematische Umkehr im Rahmen der Erfindung liegt, d.h. eine Ausgestaltung, bei der nicht die Ventilfläche 21 des Ventilverschlußgliedes 19 durchgehend eben ist, sondern statt dessen die gehäuseseitige Sitzfläche 17 durchgehend eben ist und die zueinander konzentrischen einzelnen Ringflächen 37 dann an der axialen Ventilfläche 21 des Ventilverschlußgliedes 19 ausgebildet sind.

Auch bei den in Fig. 9 - 12 gezeigten Ausführungsbeispielen weist zumindest eine der beiden in Schließstellung miteinander in Anlageberührung stehenden Flächen 17, 21 eine die Kontaktfläche verringernde Form und/oder Größe auf. Dabei sind hier beim Ausführungsbeispiel gemäß Fig. 9 und 10 mehrere radial verlaufende, eingetiefte Nuten 39, 40 vorgesehen, die hier an der axialen Ventilfläche 21 des Ventilverschlußgliedes 19 ausgebildet sind. Beim gezeigten Ausführungsbeispiel haben diese Nuten 39, 40 einen etwa V-förmigen Querschnitt. Sie sind miteinander verbunden, wobei der Verbindungsabschnitt in einer Flucht mit den Nuten 39, 40 verläuft. Die Nuten 39, 40 stehen darüber miteinander in Verbindung, so daß somit ein Ausgleich, sofern nötig, von einer Nut 39 zur anderen Nut 40 möglich ist, so wie dies bei den zuvor beschriebenen Ausführungsbeispielen und den dort gezeigten Ringnuten 28, 32, 38 sowie den Freiflächen 33 und 36 der Fall ist. Die Nuten 39, 40 können statt dessen natürlich auch an der Sitzfläche 17 des Gehäuses 11 ausgebildet sein. Aufgrund der Nuten 39, 40 ergeben sich somit mehrere Vorsprünge und zugleich Vertiefungen, die jeweils axial gerichtet sind und z.B. auf der Ventilfläche 21 verteilt sind. Bei einem anderen, nicht gezeigten Ausführungsbeispiel können statt Nuten auch Rillen, Kanäle od.dgl. lineare Vertiefungen vorgesehen sein, wobei diese im übrigen nicht unbedingt radial verlaufen müssen, sondern z.B. auch in Richtung von Sekanten verlaufen können.

Das in Fig. 11 und 12 gezeigte Ausführungsbeispiel entspricht dem Prinzip desjenigen in Fig. 9 und 10, wobei jedoch zusätzlich zu den Nuten 39 und 40 noch zwei weitere Nuten 41 und 42 vorgesehen sind, die ebenfalls über einen damit fluchtenden Nutabschnitt miteinander verbunden sind, so daß die Nuten 39 bis 42 hier ein Kreuz bilden. Auch hier sind diese Nuten 39 bis 42 an der axialen Ventilfläche 21 des Ventilverschlußgliedes 19 ausgebildet. Statt dessen können auch diese Nuten 39 bis 42 an der Sitzfläche 17 des Gehäuses 11 ausgebildet sein.

Bei einem anderen, nicht gezeigten Ausführungsbeispiel weist zumindest eine der beiden Flächen 17, 21, die in der Schließstellung gemäß Fig. 1 miteinander in Berührung stehen, eine oder mehrere sonstige Vertiefungen und/oder Vorsprünge auf, die auf der Fläche verteilt sind und dabei ebenfalls zumindest annähernd axial gerichtet sind. Als solche Vorsprünge sind z.B. etwa punktförmige Erhöhungen bzw. Vertiefungen möglich.

Bei einem anderen, nicht gezeigten Ausführungsbeispiel ist eine Verringerung des Kontakts der miteinander in Anlageberührung stehenden Flächen 17 und 21 bereits dadurch erreicht, daß eine entsprechend große Oberflächenrauhigkeit für diese Flächen gewählt ist, soweit diese zur Verringerung der Adhäsionskräfte ausreichend ist.

Das Drucksteuerventil 10 gemäß der Erfindung ist bei allen beschriebenen Ausführungsbeispielen außerordentlich einfach, klein und kostengünstig. Dabei ist durch die beschriebenen Maßnahmen erreicht, daß ein etwaiger sich in der Schließstellung gemäß Fig. 1 im Bereich der miteinander in Anlageberührung stehenden Flächen 17, 21 ergebender Film, z.B. aus dem flüssigen Medium, der eine Adhäsionskraft erzeugt, zerstört, zerrissen oder in sonstiger Weise aufgelöst wird und dadurch die Adhäsionskräfte, die einer Öffnungsbewegung entgegengerichtet sind, reduziert werden. Dadurch ist mit einfachen Mitteln erreicht, daß z.B. ein geforderter Öffnungsdruck etwa in der Größenordnung von 2,7 bis 2,8 bar reproduzierbar und genau eingehalten wird, und dies bei außerordentlich kostengünstigen Drucksteuerventilen 10 beschriebener Art, die als Serienteile hergestellt werden und die im übrigen außerordentlich kleine Abmessungen haben, in der Regel nur halb so groß wie die Darstellung in Fig. 1 bemessen sind.

## Patentansprüche

1. Drucksteuerventil, insbesondere für Ölspritzdüsen für Brennkraftmaschinen, mit einem Gehäuse (11), das einen Einlaßkanal (13) und einen Auslaßkanal (15) aufweist, die über eine steuerbare Ventilöffnung (18) miteinander verbunden sind, und in dem ein Ventilverschlußglied (19) gleitverschieblich gehalten ist, das mit einer zumindest im wesentlichen axialen Ventilfläche (21) unter der Wirkung einer Feder (22) gegen eine gehäuseseitige, die Ventilöffnung (18) umgebende Sitzfläche (17) angepreßt und unter einem vorgegebenen, die Axialfläche des Ventilverschlußgliedes (19) beaufschlagenden Druck eines insbesondere flüssigen Mediums im Einlaßkanal (13) gegen die Wirkung der Feder (22) von der Sitzfläche (17) abhebbar ist und die Ventilöffnung (18) für den Mediumdurchgang zum Auslaßkanal (15) freigibt, **dadurch gekennzeichnet**, daß zumindest eine der beiden, in der Schließstellung des Ventilverschlußgliedes (19) miteinander in Anlageberührung stehenden Flächen (17, 21) des Gehäuses (11) bzw. des Ventilverschlußgliedes (19) die Kontaktfläche verringernd ausgebildet ist.

2. Drucksteuerventil nach Anspruch 1, **dadurch gekennzeichnet**, daß zumindest eine der beiden Flächen (17, 21) eine die Kontaktfläche verringernde Form und/oder Größe aufweist.

3. Drucksteuerventil nach Anspruch 1 oder 2, **dadurch gekennzeichnet**, daß die Fläche (17 oder 21) des einen Teils (11 oder 19), insbesondere die gehäuseseitige Sitzfläche (17), im Querschnitt als ringförmige Kegelstumpffläche (25) ausgebildet ist.

4. Drucksteuerventil nach einem der Ansprüche 1 - 3, **dadurch gekennzeichnet**, daß die Fläche (21 oder 17) des anderen Teils (19 bzw. 11), insbesondere die Ventilfläche (21) des Ventilverschlußgliedes (19), im Querschnitt als ringförmige, nach außen konvex gewölbte Bogenfläche (16) ausgebildet ist.

5. Drucksteuerventil nach Anspruch 1 oder 2, **dadurch gekennzeichnet**, daß zumindest eine der beiden Flächen (17, 21) in Axialrichtung überstehende Ringflächen (27, 29 bzw. 30, 31 bzw. 34 bzw. 37) aufweist.

6. Drucksteuerventil nach Anspruch 5, **dadurch gekennzeichnet**, daß mehrere zueinander konzentrische, axial überstehende Ringflächen (27, 29 bzw. 30, 31 bzw. 37) vorgesehen sind.

7. Drucksteuerventil nach Anspruch 5 oder 6, **dadurch gekennzeichnet**, daß die axial überstehenden Ringflächen (27, 29 bzw. 30, 31 bzw. 37) alle innerhalb einer gemeinsamen Diametralebene verlaufen.

8. Drucksteuerventil nach einem der Ansprüche 5 - 7, **dadurch gekennzeichnet**, daß die mindestens eine axial überstehende Ringfläche (27, 29 bzw. 30, 31 bzw. 34) kreisringförmig ausgebildet ist.

9. Drucksteuerventil nach einem der Ansprüche 5 - 8, **dadurch gekennzeichnet**, daß die mindestens eine axial überstehende Ringfläche (27, 29 bzw. 30, 31 bzw. 37) durch zumindest eine Ringnut (28 bzw. 32 bzw. 38) von der übrigen Axialfläche abgesetzt ist.

10. Drucksteuerventil nach Anspruch 9, **dadurch gekennzeichnet**, daß die mindestens eine Ringnut (28 bzw. 32 bzw. 38) im Querschnitt etwa U-förmig oder V-förmig ausgebildet ist.

11. Drucksteuerventil nach einem der Ansprüche 5 - 10, **dadurch gekennzeichnet**, daß die eine oder mehreren axial überstehenden Ringflächen (34 bzw. 37) zumindest annähernd nach Art von Ringschneiden ausgebildet sind.

**12.** Drucksteuerventil nach Anspruch 11, **gekennzeichnet durch** mehrere zueinander konzentrische Ringschneiden (37), die alle innerhalb einer gemeinsamen Diametralebene verlaufen.

**13.** Drucksteuerventil nach Anspruch 11, **gekennzeichnet durch** eine einzige, etwa als Ringschneide gebildete Ringfläche (34).

**14.** Drucksteuerventil nach Anspruch 12 oder 13, **dadurch gekennzeichnet**, daß die mindestens eine Ringschneide an der gehäuseseitigen Sitzfläche (17) ausgebildet ist (Fig. 6, 7).

**15.** Drucksteuerventil nach einem der Ansprüche 5 - 10, **dadurch gekennzeichnet**, daß die mindestens eine oder mehreren axial überstehenden Ringflächen (27, 29 bzw. 35) an der axialen Ventilfläche (21) des Ventilverschlußgliedes (19) ausgebildet sind.

**16.** Drucksteuerventil nach einem der Ansprüche 5 - 10, **dadurch gekennzeichnet**, daß die mindestens eine oder mehreren axial überstehenden Ringflächen (30, 31 bzw. 34 bzw. 37), insbesondere kreisscheibenförmigen Ringflächen, an der gehäuseseitigen Sitzfläche (17) ausgebildet sind.

**17.** Drucksteuerventil nach einem oder mehreren der vorhergehenden Ansprüche, **dadurch gekennzeichnet**, daß zumindest eine der beiden Flächen (17, 21) eine oder mehrere in Axialrichtung abfallende Ringflächen (34 bzw. 35) aufweist.

**18.** Drucksteuerventil nach Anspruch 17, **dadurch gekennzeichnet**, daß die mindestens eine axial abfallende Ringfläche (35) an der axialen Ventilfläche (21) des Ventilverschlußgliedes (19) ausgebildet ist (Fig. 8).

**19.** Drucksteuerventil nach einem der Ansprüche 1 - 18, **dadurch gekennzeichnet**, daß zumindest eine der beiden Flächen (17, 21) eine oder mehrere Vertiefungen (39 - 42) und/oder Vorsprünge aufweist, die zumindest annähernd axial gerichtet sind.

**20.** Drucksteuerventil nach Anspruch 19, **gekennzeichnet durch** mehrere einzelne, auf der Fläche verteilte Vorsprünge und/oder Vertiefungen.

**21.** Drucksteuerventil nach Anspruch 19 oder 20, **gekennzeichnet durch** eine oder mehrere radial oder in Richtung von Sekanten verlaufende eingetiefte Nuten (39 - 42), Rillen, Kanäle od.dgl. lineare Vertiefungen.

**22.** Drucksteuerventil nach Anspruch 21, **dadurch gekennzeichnet**, daß die Nuten (39 - 42), Rillen, Kanäle od.dgl. linearen Vertiefungen an der axialen Ventilfläche (21) des Ventilverschlußgliedes (19) ausgebildet sind.

**23.** Drucksteuerventil nach einem der Ansprüche 1 - 22, **dadurch gekennzeichnet**, daß das Ventilverschlußglied (19) als etwa hutförmiger oder kappenförmiger Kolben (29) ausgebildet ist.

**24.** Drucksteuerventil nach einem der Ansprüche 1 - 23, **dadurch gekennzeichnet**, daß der Auslaßkanal (15) in Axialabstand von der Ventilöffnung (18) und der Sitzfläche (17) in eine das Ventilverschlußglied (19) führende Bohrung (12) des Gehäuses (11) mündet.

Fig.1 · Fig.2 · Fig.3 · Fig.4 · Fig.5 · Fig.6 · Fig.7

Fig. 8

Fig. 9

Fig. 11

Fig. 10

Fig. 12

| | **EINSCHLÄGIGE DOKUMENTE** | | EP 90125546.3 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁴) |
| Y | <u>DE - A1 - 3 227 409</u><br>(BAYERISCHE MOTOREN WERKE AG)<br> * Figurenbeschreibung; Fig. 1,2 * | 1,2 | F 16 K 1/36<br>F 16 K 17/04<br>F 01 P 3/08 |
| A | * Figurenbeschreibung; Fig. 1,2 * | 23,24 | |
| Y | PATENT ABSTRACTS OF JAPAN, unexamined applications, M Sektion, Band 7, Nr. 81, 5. April 1983 THE PATENT OFFICE JAPANESE GOVERNMENT Seite 140 M 205<br> * Kokai-Nr. 58-8 872 (MICHITOSHI KITANO) * | 1,2 | |
| A | * Gesamt * | 5-12, 20 | |
| A | <u>FR - A - 782 110</u><br>(SOCIETE POUR LE PERFECTION- NEMENT DE LA CHAUFERIE)<br> * Figurenbeschreibung; Fig. 1 * | 1,2,5, 6,8- 11,16, 20 | RECHERCHIERTE SACHGEBIETE (Int. Cl.⁴) |
| A | <u>GB - A - 178 766</u><br>(AYLAND)<br> * Fig. * | 1-3,5, 6,8, 10,11, 16 | F 16 K<br>F 01 P<br>G 05 D |
| A | <u>DE - A - 2 044 210</u><br>(A. TEVES GMBH)<br> * Fig. * | 1,2,5, 8,23 | |
| A | <u>US - A - 1 022 171</u><br>(BALLARD)<br> * Fig. 1,3 * | 1-3, 23,24 | |
| A | <u>US - A - 3 199 532</u><br>(TRICK) | 1-3,24 | |

Der vorliegende Recherchenbericht wurde für alle Patentansprüche erstellt.

| Recherchenort | Abschlußdatum der Recherche | Prüfer |
|---|---|---|
| WIEN | 31-05-1991 | ROUSSARIAN |

−2−

EP 90125546.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| | *. Fig.. 1,2 *<br><br>---- | | |
| | | | RECHERCHIERTE SACHGEBIETE (Int. Cl⁵) |

Der vorliegende Recherchenbericht wurde für alle Patentansprüche erstellt.

| Recherchenort | Abschlußdatum der Recherche | Prüfer |
|---|---|---|
| WIEN | 31-05-1991 | ROUSSARIAN |